# EUROPEAN PATENT APPLICATION

(11) **EP 2 222 125 A1**
(43) Date of publication of application: **25.08.2010**
(21) Application number: 10154045.8
(22) Date of filing: 19.02.2010
(51) Int. Cl.: H04W 72/04, H04W 74/08

(54) **Method for random access process in mobile communication system**

(30) Priority: 24.02.2009 KR 20090015180
(71) Applicant: Pantech Co., Ltd., Seoul 121-792 (KR)
(72) Inventor: Cho, Hyung Soo, 121-792, Seoul (KR); Yoon, Sung Kyum, 121-792, Seoul (KR)
(74) Representative: Herzog, Markus

(57) **Abstract**

The present invention relates to a method for a random access process in a mobile communication system. According to the exemplary embodiments, in the case where a mobile terminal requests a random access to a network, when the network is not able to promptly allocate a resource for the random access to the mobile terminal due to an insufficient resource, the mobile terminal is maintained in a standby state without repeatedly requesting the random access to the network. Accordingly, it is possible to reduce the uplink signal interference caused by the repeated random access request, reduce the possibility of communication contention between the mobile terminals for the access to the mobile communication system, and reduce the power consumption of the mobile terminal.

## Description

### CROSS-REFERENCE TO RELATED APPLICATION

This application claims priority from and the benefit of Korean Patent Application No. 10-2009-0015180, filed on February 24, 2009, which is hereby incorporated by reference for all purposes as if fully set forth herein .

### BACKGROUND

FIELD OF THE INVENTION

Exemplary embodiments of the present invention relate to a method for a random access process in a mobile communication system, and more particularly, to a method for a random access process in a mobile communication system in which a network stores a random access request transmitted from a mobile terminal so as to prevent the mobile terminal from repeating the random access request in the case where the network is not able to promptly allocate a resource to the mobile terminal requesting the random access due to an insufficient resource.

DISCUSSION OF THE BACKGROUND

Generally, in the case where a mobile terminal requests random access to a network of a mobile communication system, the mobile terminal transmits a random access request message to the network, and the network allocates a resource to the mobile terminal by transmitting a response message for granting random access to the mobile terminal, so that random access to the network is performed by using the resource.

In a known mobile communication system, the mobile terminal requests random access to the network in order to perform random access to the network. When the network receives the random access request from the mobile terminal and has an available resource for a communication channel to be allocated to the mobile terminal, the network promptly transmits a response message for granting random access to the mobile terminal so as to allow the mobile terminal to promptly access the network by using the resource allocated to the mobile terminal.

However, when the network is not able to promptly allocate the resource for the communication channel to be allocated to the mobile terminal in the event of the random access request of the mobile terminal, the random access requested by the mobile terminal is not granted. For this reason, the mobile terminal repeatedly transmits the random access request message to the network until random access is granted by the network.

In the case where the mobile terminal requests random access to the network for the purpose of random access to the mobile terminal in the known mobile communication system, when the network is not able to grant the random access requested by the mobile terminal due to an insufficient resource for the communication channel to be allocated to the mobile terminal, the mobile terminal repeatedly transmits the random access request message until random access is granted by the network.

Accordingly, since the mobile terminal repeatedly performs the random access request to the network, problems arise in that uplink signal interference increases, a possibility of a communication contention between the mobile terminals for access to the network increases, and power consumption of the mobile terminal increases.

### SUMMARY OF THE INVENTION

Exemplary embodiments of the present invention provide a method for a random access process in a mobile communication system in which a network stores a random access request transmitted from a mobile terminal so as to prevent the mobile terminal from repeating the random access request in the case where the network is not able to promptly allocate a resource to the mobile terminal requesting random access due to an insufficient resource.

Additional features of the invention will be set forth in the description which follows, and in part will be apparent from the description, or may be learned by practice of the invention.

An exemplary embodiment of the present invention discloses a method for a random access process in a mobile communication system, comprising requesting random access to a network; maintaining a standby state without repeatedly requesting the random access to the network when a mobile terminal receives from the network a queued acknowledge (QACK) for notifying the mobile terminal to be in the standby state; and releasing the standby state of the mobile terminal and communicating with the network when the mobile terminal receives from the network an acknowledge (ACK) for notifying the mobile terminal to grant the random access.

An exemplary embodiment of the present invention also discloses a method for a random access process in a mobile communication system comprising receiving a random access request from a mobile terminal by a network; storing the random access request information transmitted from the mobile terminal and transmitting to the mobile terminal a queued acknowledge (QACK) to notify the mobile terminal to be in a standby state when a resource allocation for a random access of the mobile terminal is checked to be impossible, by the network; and transmitting to the mobile terminal requesting the random access an acknowledge (ACK) to notify the mobile terminal to grant the random access on the basis of a stored random access request information when the resource allocation becomes possible, by the network.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 is a process diagram illustrating a method for a random access process in a mobile communication system according to an exemplary embodiment of the present invention; and

FIG. 2 is a process diagram illustrating a method for a random access process in a mobile communication system according to another exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defmed in commonly used dictionaries, should be interpreted as having a meaning that is consistent with their meaning in the context of the relevant art and the present disclosure, and will not be interpreted in an idealized or overly formal sense unless expressly so defmed herein.

Hereinafter, a random access process in a mobile communication system according to exemplary embodiments of the present invention will be described in detail with reference to the accompanying drawings.

In the case where a mobile terminal requests random access to a network of a mobile communication system, if the network is not able to promptly allocate a resource for random access to the mobile terminal, the network stores the random access request information transmitted from the mobile terminal and transmits to the mobile terminal a queued acknowledge (QACK) for notifying the mobile terminal to be in a standby state, thereby allowing the mobile terminal not to repeatedly perform the random access request. When the resource allocation becomes possible later on, the network transmits to the mobile terminal an acknowledge (ACK) for granting access so that the terminal can access the mobile communication system.

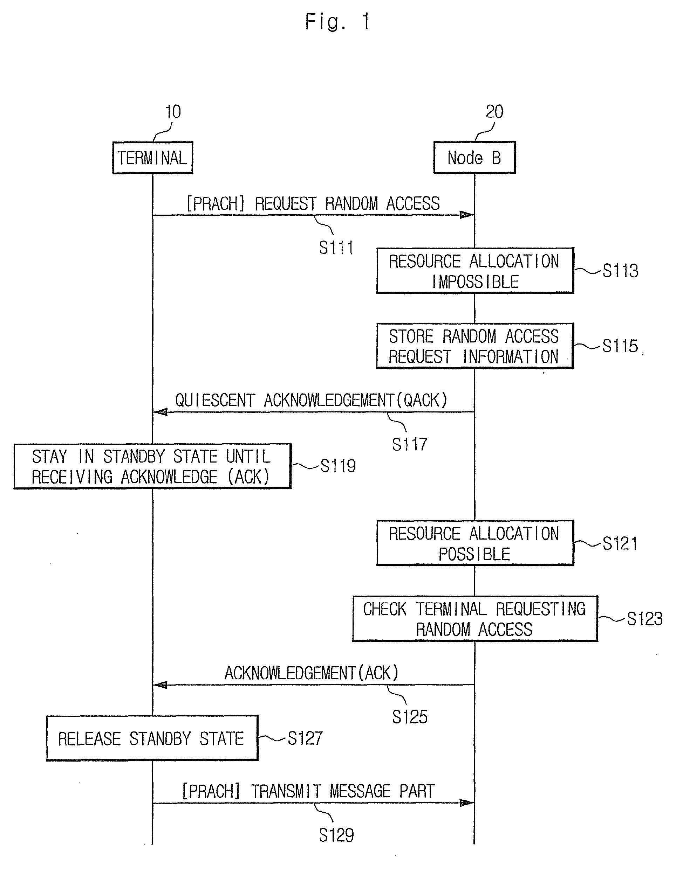

FIG. 1 is a process diagram illustrating a method for a random access process in the mobile communication system according to an exemplary embodiment of the present invention, which illustrates the method for the random access process in the mobile communication system of a wideband code division multiple access (WCDMA) type using a preamble.

First, a mobile terminal 10 requests random access by transmitting a preamble including an orthogonal code to Node B 20 of the mobile communication system via a physical random access channel (PRACH) (Step S111).

Node B 20 of the mobile communication system receives the random access request transmitted from the mobile terminal 10 in Step S111. When it is determined that the resource for the random access requested by the mobile terminal 10 is not able to be allocated due to an insufficient resource after Node B 20 receiving the random access request from the mobile terminal 10 checks the resource (Step S113), Node B 20 stores the random access request information transmitted from the mobile terminal 10 in Step S111 (Step S115).

Then, the QACK for notifying to be in a standby state is transmitted to the mobile terminal 10 via an acquisition indication channel (AICH), where the QACK indicates the state where the resource is not able to be allocated due to an insufficient resource (Step S117).

The mobile terminal 10 receives the QACK transmitted from Node B 20 in Step S117. When the mobile terminal 10 receives the QACK from Node B 20 via the AICH, the mobile terminal 10 is maintained in standby state until the ACK is transmitted from Node B 20 to the mobile terminal 10 (Step S119).

Since the mobile terminal 10 is maintained in standby state in accordance with the QACK transmitted from Node B 20 in Step S119, the mobile terminal 10 does not repeatedly request the random access to Node B 20.

When the resource allocation becomes possible (Step S121) after the QACK is transmitted to the mobile terminal 10 in Step S117, Node B 20 checks the mobile terminal 10, which requests random access on the basis of the random access request information stored in Step S115 (Step S123).

Then, the ACK for notifying to grant random access is transmitted to the mobile terminal 10 which is checked in Step S123 via the AICH (Step S125).

The mobile terminal 10 receiving the ACK transmitted from Node B 20 in Step S125 releases the standby state (Step S127), and transmits a message part to Node B 20 via the PEACH (Step S129).

Various methods of realizing the QACK, which is transmitted from Node B 20 to the terminal 10 via the AICH in Step S117, may be considered. For example, in order to add the QACK, the QACK is added to the reference or signature by extending an indication signal. Alternatively, two AI frames are transmitted. The first frame indicates only the ACK/NACK, and the second frame indicates the information on the QACK. In these types of methods, it is possible to maintain the backward compatibility for the existing system in such a manner that only the terminal for assisting the QACK is able to recognize the QACK and is operated in accordance with the QACK.

In addition, as another example, in the mobile communication system of the WCDMA type, the ACK/NACK for the signature is recognized as '1'/'-1', and the QACK operation is performed by using "-1" as the QACK.

Meanwhile, after the terminal 10 receives the QACK from Node B 20 in Step S117 as described above, the terminal 10 is maintained in standby state without requesting random access to Node B 20. In this state, when the terminal 10 receives the ACK transmitted from Node B 20 in Step S125, the terminal 10 transmits the message part to Node B 20 in Step S129. At this time, a time period during which the mobile terminal 10 requesting random access receives the QACK and transmits the message part may be set variously.

For example, when the mobile terminal 10 receives the ACK from Node B 20 by decoding the AICH in standby state where the random access request of the mobile terminal 10 is not repeatedly performed after the mobile terminal 10 receives the QACK from Node B 20 by decoding the AICH, the mobile terminal 10 transmits the message part. Alternatively, when the mobile terminal 10 receives the QACK from Node B 20 by decoding the AICH, the mobile terminal 10 transmits the message part on the assumption that the QACK is transmitted from Node B 20 without decoding the AICH in standby state where the random access to Node B 20 is not repeatedly performed. Alternatively, when the mobile terminal 10 receives the ACK from Node B 20 by promptly decoding the AICH after the mobile terminal 10 receives the QACK from Node B 20 by decoding the AICH, the mobile terminal 10 transmits the message part.

As described above, in the case where the mobile terminal 10 requests random access to Node B 20 in the mobile communication system of WCDMA type, when Node B 20 is not able to allocate the resource to the mobile terminal 10 due to an insufficient resource, Node B 20 stores the random access request information transmitted from the mobile terminal 10, and transmits to the mobile terminal 10 the QACK for notifying to be in standby state. Accordingly, the mobile terminal 10 is maintained in standby state without repeatedly transmitting the random access to Node B 20 until it receives the ACK for notifying to grant the random access from Node B 20.

Likewise, when the resource allocation becomes possible after the mobile terminal 10 is maintained in standby state by transmitting the QACK to the mobile terminal 10, Node B 20 checks the mobile terminal 10, which requests the random access on the basis of random access request information stored in Node B 20, and transmits the ACK for notifying to grant random access to the checked mobile terminal 10. Accordingly, the mobile terminal 10 releases standby state, and transmits the message part to Node B 20.

As described above, in the case where the disclosure is applied to the mobile communication system of WCDMA type, when the resource is not able to be allocated to the mobile terminal 10 requesting random access to Node B 20 of the mobile communication system, Node B 20 transmits to the mobile terminal 10 the QACK for notifying to be in standby state without repeatedly transmitting the random access request to Node B 20. Then, when the resource allocation becomes possible, Node B 20 transmits the ACK for notifying to grant random access to the mobile terminal 10 so that the mobile terminal 10 can access the mobile communication system.

Since the mobile terminal 10 is maintained in standby state without repeatedly transmitting the random access request to Node B 20 until it receives the ACK from Node B 20, it is possible to reduce the uplink signal interference caused by a repeated random access request, reduce the possibility of communication contention between the mobile terminals for access to the mobile communication system, and reduce the power consumption of the mobile terminal.

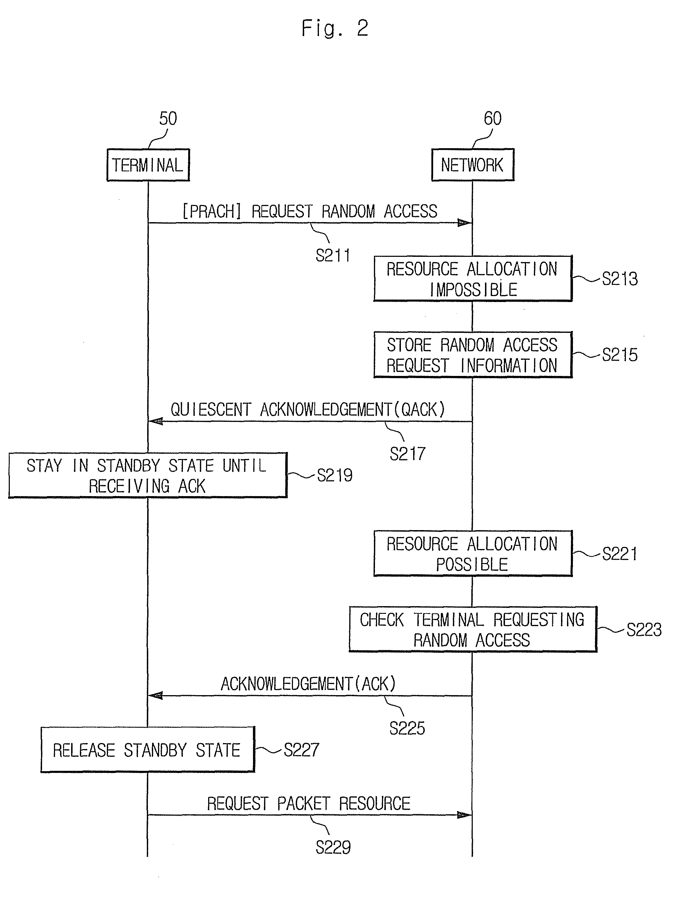

FIG. 2 is a process diagram illustrating a method for the random access process in a mobile communication system according to another exemplary embodiment of the present invention, which illustrates the method for the random access process in the mobile communication system of a frequency division multiple access (FDMA) type or a time division multiple access (TDMA) type which does not use the preamble.

First, a mobile terminal 50 requests random access to a network 60 via a random access channel (RACH) (Step S211).

The network 60 receives random access request transmitted from the mobile terminal 50 in Step S211.

When it is determined that the resource for the random access requested by the mobile terminal 50 is not able to be allocated due to an insufficient resource after the network 60 receiving the random access request from the mobile terminal 50 checks the resource (Step S213), the network 60 stores the random access request information transmitted from the mobile terminal 50 in Step S211 (Step S215).

Then, the QACK for notifying to be in standby state is transmitted to the mobile terminal 50 via an access grant channel (AGCH) so that the mobile terminal 50 is maintained in standby state, where the QACK indicates the state where the resource is not able to be allocated due to an insufficient resource (Step S217).

The mobile terminal 50 receives the QACK transmitted from the network 60 in Step S217. When the mobile terminal 50 receives the QACK from the network 60 via the AGCH, the mobile terminal 50 is maintained in standby state until the ACK is transmitted from the network 60 to the mobile terminal 50.

Since the mobile terminal 50 is maintained in standby state in accordance with the QACK transmitted from the network 50 in Step S219, the mobile terminal 50 does not repeatedly request random access to the network 60.

When the resource allocation becomes possible (Step S221) after the QACK is transmitted to the mobile terminal 50 in Step S217, the network 60 checks the mobile terminal 50 which requests random access on the basis of the random access request information stored in Step S215 (Step S223).

Then, the ACK for notifying to grant random access is transmitted to the mobile terminal 50 which is checked in Step S223 via the AGCH (Step S225).

The mobile terminal 50 receiving the ACK transmitted from the network 60 in Step S225 releases standby state (Step S227), and the subsequent procedure is performed by requesting a packet resource to the network 60 via a packet associated control channel (PACCH) (Step S229).

As described above, in the case where the mobile terminal 50 requests random access to the network 60 in the mobile communication system of TDMA or FDMA type, when the network 60 is not able to allocate a resource to the mobile terminal 50 due to an insufficient resource, the network 60 stores the random access request information transmitted from the mobile terminal 50, and transmits to the mobile terminal 50 the QACK for notifying to be in standby state. Accordingly, the mobile terminal 50 is maintained in standby state without repeatedly transmitting the random access to the network 60 until it receives the ACK for notifying to grant the random access from the network 60.

When the resource allocation becomes possible after the mobile terminal 50 is maintained in standby state by transmitting the QACK to the mobile terminal 50, the network 60 checks the mobile terminal 50 which requests random access on the basis of the random access request information stored in the network 60, and transmits the ACK for notifying to grant random access to the checked mobile terminal 50. Accordingly, the mobile terminal 50 releases standby state, and performs the subsequent procedure by requesting the packet resource to the network 60.

As described above, in the case where the disclosure is applied to the mobile communication system of TDMA or FDMA type, when a resource is not able to be allocated to the mobile terminal 50 requesting random access to the network 60, the network 60 transmits the QACK to the mobile terminal 50 so that the mobile terminal 50 does not repeatedly transmit random access request to the network 60. Then, when the resource allocation becomes possible, the network 60 transmits the ACK for notifying to grant random access to the mobile terminal 50 so that the mobile terminal 50 can access the network 60.

Since the mobile terminal 50 is maintained in standby state without repeatedly transmitting the random access request to the network 60 until it receives the ACK from the network 60, it is possible to reduce the uplink signal interference caused by a repeated random access request, reduce the possibility of communication contention between the mobile terminals for the access to the network, and reduce the power consumption of the mobile terminal.

The disclosure may be usefully applied to a mobile communication system. Since the mobile terminal is able to access the network without repeatedly requesting the random access to the network even in the case where the terminal wirelessly requests the random access to the communication system and the network is not able to allocate a resource to the mobile terminal due to an insufficient resource, it is possible to reduce the uplink signal interference caused by the repeated random access request, reduce the possibility of communication contention between the mobile terminals for the access to the network, and reduce the power consumption of the mobile terminal.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents
The present invention relates to a method for a random access process in a mobile communication system. According to the exemplary embodiments, in the case where a mobile terminal requests a random access to a network, when the network is not able to promptly allocate a resource for the random access to the mobile terminal due to an insufficient resource, the mobile terminal is maintained in a standby state without repeatedly requesting the random access to the network. Accordingly, it is possible to reduce the uplink signal interference caused by the repeated random access request, reduce the possibility of communication contention between the mobile terminals for the access to the mobile communication system, and reduce the power consumption of the mobile terminal.

## Claims

1. A method for a random access process in a mobile communication system, comprising:
requesting random access to a network;
maintaining a standby state without repeatedly requesting the random access to the network when a mobile terminal receives from the network a queued acknowledge (QACK) for notifying the mobile terminal to be in the standby state; and
releasing the standby state of the mobile terminal and communicating with the network when the mobile terminal receives from the network an acknowledge (ACK) for notifying the mobile terminal to grant the random access.

2. The method of claim 1, wherein the random access request is performed by transmitting a preamble via a physical random access channel (PRACH) in a mobile communication system of a wideband code division multiple access (WCDMA) type.

3. The method of claim 1, wherein the random access request is performed via a random access channel (RACH) in a mobile communication system of a time division multiple access (TDMA) type.

4. The method of claim 1, wherein the queued acknowledge (QACK) and the acknowledge (ACK) are received via an acquisition indication channel (AICH) in a mobile communication system of a wideband code division multiple access (WCDMA) type.

5. The method of claim 1, wherein the queued acknowledge (QACK) and the acknowledge (ACK) are received via an access grant channel (AGCH) in a mobile communication system of a time division multiple access (TDMA) type.

6. A method for a random access process in a mobile communication system comprising:
receiving a random access request from a mobile terminal by a network;
storing the random access request information transmitted from the mobile terminal and transmitting to the mobile terminal a queued acknowledge (QACK) to notify the mobile terminal to be in a standby state when a resource allocation for a random access of the mobile terminal is checked to be impossible, by the network; and
transmitting to the mobile terminal requesting the random access an acknowledge (ACK) to notify the mobile terminal to grant the random access on the basis of a stored random access request information when the resource allocation becomes possible, by the network.

7. The method of claim 6, wherein the random access request is performed by receiving a preamble via a physical random access channel (PRACH) in a mobile communication system of a wideband code division multiple access (WCDMA) type.

8. The method of claim 6, wherein the random access request is received via a random access channel (RACH) in a mobile communication system of a time division multiple access (TDMA) type.

9. The method of claim 6, wherein the queued acknowledge (QACK) and the acknowledge (ACK) are transmitted via an acquisition indication channel (AICH) in a mobile communication system of a wideband code division multiple access (WCDMA) type.

10. The method for the random access process in the mobile communication system according to claim 6, wherein the queued acknowledge (QACK) and the acknowledge (ACK) are transmitted via an access grant channel (AGCH) in a mobile communication system of a time division multiple access (TDMA) type.
